# EUROPEAN PATENT APPLICATION

(11) **EP 4 841 470 A1**
(43) Date of publication of application: **18.11.2026**
(21) Application number: 26175411.3
(22) Date of filing: 29.04.2026
(51) Int. Cl.: G06F 16/355

(54) **AI-POWERED PERSON PROFILING THROUGH INTELLIGENT DOCUMENT MATCHING AND CLUSTERING**

(30) Priority: 30.04.2025 US 202519195715
(71) Applicant: Strider Technologies, Inc., South Jordan, UT 84095 (US)
(72) Inventor: WESTCOTT, Lincoln, Highland (US); LENTZ, Jon, Leesburg (US); LIECHTY, Matthew, American Fork (US); CLARK, Justin, Salt Lake City (US); BROWN, Michael, Broadlands (US)
(74) Representative: Eisenführ Speiser

(57) **Abstract**

Current person-profiling solutions typically focus on limited subsets of documents related to relevant entities, i.e., rather than the entire corpus of documents available via the Internet or other sources. Current solutions also typically rely heavily on increasingly complex rules-based profiling methods that may: (1) depend primarily on exact keyword matching; (2) struggle to accurately differentiate among entities sharing similar or identical names and related attributes; (3) fail to reliably identify and link the same entity across multiple documents; (4) cannot intelligently infer or connect related pieces of information; and/or (5) are not capable of automatically or iteratively refining their search parameters, e.g., based on newly-discovered or evolving information. Thus, to effectively extract meaningful insights from such document data sets and create reliable and accurate personal profiles, solutions are needed that are adaptive, contextually "intelligent" (e.g., leveraging Large Language Models (LLMs)) and scalable beyond traditional highly-complex rule-based profiling systems.

## Description

### BACKGROUND

Entities, such as companies or individuals, increasingly need to develop, build, and analyze personal profiles, e.g., to meet risk assessment and other business needs. However, there are now billions of potentially-relevant documents available from diverse sources across the Internet, consisting primarily of unstructured text in numerous languages.

As such, it has become challenging for such entities to reliably extract accurate, structured information about specific entities (e.g., individuals) and effectively disambiguate entities at this massive scale, particularly when faced with varying contexts, inconsistent naming conventions, and multilingual complexities. In conventional systems, potentially relevant documents must be located, parsed, and analyzed individually, often through multiple language-specific pipelines and manually created rule sets. For document collections comprising millions or billions of documents, as well as highly ambiguous naming patterns and multilingual content, this can lead to an almost unmanageable increase in computational effort, storage requirements, and network traffic, which can make comprehensive profiling impractical or even impossible with traditional approaches.

Accordingly, improved techniques for personal profiling through intelligent document matching and clustering methods are desirable, especially techniques which allow large volumes of heterogeneous, multilingual information to be processed in a scalable and resource-efficient manner.

### SUMMARY

Methods and systems are disclosed to employ advanced methods, such as multiple coordinated calls to Large Language Models (LLMs), artificial intelligence (AI)-based clustering algorithms, iterative reasoning, data extraction techniques, and/or sophisticated search strategies, to automate the generation of comprehensive, structured personal profiles from diverse open-source or otherwise freely-available datasets.

The technical problems that the solutions presented herein address include: accurately identifying, matching, and integrating scattered or ambiguous personal data from multiple sources, which can help to overcome common obstacles, such as duplicate profiles, name ambiguity, and data fragmentation.

According to some embodiments presented herein, by using advanced AI reasoning and clustering capabilities, the solutions significantly reduce the amount of manual effort required, increase accuracy, and improve efficiency compared to traditional methods. In particular, embodiments presented herein can address the problem of enabling a computer system to construct and maintain disambiguated person profiles from very large, heterogeneous and/or multilingual document collections while reducing the computational resources required.

In an aspect of the present invention, a computer-implemented method is presented, comprising: collecting input from a user regarding one or more persons of interest (POIs), searching, based on the collected input, one or more repositories for possible matches to the one or more POIs, clustering the possible matches into distinct master profiles for each of the one or more POIs, extracting a set of attributes from the master profiles for each of the one or more POIs, performing a targeted document discovery based on the extracted set of attributes for each of the one or more POIs, generating a document profile for each of the discovered documents for each of the respective one or more POIs, clustering, based on the generated document profiles, the discovered documents for each of the respective one or more POIs, adding the clustered discovered documents to respective matching master profiles for the one or more POIs, and returning to the user, in response to a set of termination criteria being met, the master profiles for each of the one or more POIs.

In an embodiment, the input comprises one or more of: a name; an alias; an affiliation; an email address; or a telephone number.

In an embodiment, the one or more repositories comprise at least one of: a resume repository; a curriculum vitae (C.V.) repository; a social networking profile repository; or an organizational membership directory.

In an embodiment, clustering the possible matches into distinct master profiles for each of the one or more POIs further comprises: performing clustering operations using a Large Language Model (LLM).

In an embodiment, the method further comprises: verifying by the user, prior to extracting the corresponding set of attributes for a POI, that at least one of the distinct master profiles relates to the POI.

In an embodiment, extracting a set of attributes from the master profiles for each of the one or more POIs further comprises: extracting the set of attributes using an LLM.

In an embodiment, the set of attributes comprises one or more of: expertise; skills; a name; an affiliation; an email address; a telephone number; and an organizational affiliation.

In an embodiment, performing a targeted document discovery further comprises performing at least one of the following operations: (1) using a syllable-based break down of a name attribute of a POI, (2) using a shortened form or diminutive substitution of a name attribute of a POI, (3) searching a Chinese language-based term in both simplified and traditional Chinese characters, (4) using an LLM to generate multilingual organization name aliases based on a user-specified language, (5) using an LLM to generate expertise extractions from discovered documents, or (6) prioritizing discovery of documents containing one or more predetermined risk indicators.

In an embodiment, performing a targeted document discovery further comprises: performing a deduplication operation on the discovered documents.

In an embodiment, generating a document profile for each of the discovered documents for each of the respective one or more POIs further comprises: generating a document profile for each of the discovered documents for each of the respective one or more POIs using an LLM.

In an embodiment, clustering, based on the generated document profiles, the discovered documents for each of the respective one or more POIs further comprises: clustering the discovered documents using an LLM.

In an embodiment, the set of termination criteria comprises at least one of: a maximum cost criterium; a maximum iteration threshold criterium; and a new information discovery threshold criterium.

In an embodiment, the method further comprises, in response to the set of termination criteria not being met: (a) expanding upon the extracted set of attributes for at least one of the master profiles for a first POI of the one or more POIs, (b) performing an updated targeted document discovery based on the expanded extracted set of attributes for the first POI, (c) generating a document profile for each of the discovered documents for the first POI during the updated targeted document discovery operation, (d) clustering, based on the generated document profiles for the first POI, the discovered documents for the first POI, and (e) adding the clustered discovered documents for the first POI to the respective master profile for the first POI.

In an embodiment, the method further comprises: repeating steps (a)-(e) until the set of termination criteria is met.

In a further aspect of the present invention, a non-transitory program storage device (NPSD) is presented, comprising computer readable instructions executable by one or more processors to: collect input from a user regarding one or more persons of interest (POIs), search, based on the collected input, one or more repositories for possible matches to the one or more POIs, cluster the possible matches into distinct master profiles for each of the one or more POIs, extract a set of attributes from the master profiles for each of the one or more POIs, perform a targeted document discovery based on the extracted set of attributes for each of the one or more POIs, generate a document profile for each of the discovered documents for each of the respective one or more POIs, cluster, based on the generated document profiles, the discovered documents for each of the respective one or more POIs, add the clustered discovered documents to respective matching master profiles for the one or more POIs, and return to the user, in response to a set of termination criteria being met, the master profiles for each of the one or more POIs.

In an embodiment, the NPSD further comprises computer readable instructions executable by the one or more processors to: (a) expand upon the extracted set of attributes for at least one of the master profiles for a first POI of the one or more POIs, (b) perform an updated targeted document discovery based on the expanded extracted set of attributes for the first POI, (c) generate a document profile for each of the discovered documents for the first POI during the updated targeted document discovery operation, (d) cluster, based on the generated document profiles for the first POI, the discovered documents for the first POI, and (e) add the clustered discovered documents for the first POI to the respective master profile for the first POI.

In an embodiment, the NPSD further comprises computer readable instructions executable by the one or more processors to: repeat steps (a)-(e) until the set of termination criteria is met.

In another aspect of the present invention, a system is presented, comprising: an electronic storage component, a user interface device, and one or more processors operatively coupled to the electronic storage component, wherein the one or more processors are configured to execute instructions causing the one or more processors to: collect input from a user, via the user interface device, regarding one or more persons of interest (POIs), search, based on the collected input, one or more repositories for possible matches to the one or more POIs, cluster the possible matches into distinct master profiles for each of the one or more POIs, extract a set of attributes from the master profiles for each of the one or more POIs, perform a targeted document discovery based on the extracted set of attributes for each of the one or more POIs, generate a document profile for each of the discovered documents for each of the respective one or more POIs, cluster, based on the generated document profiles, the discovered documents for each of the respective one or more POIs, add the clustered discovered documents to respective matching master profiles for the one or more POIs, and return to the user, in response to a set of termination criteria being met, the master profiles for each of the one or more POIs.

In an embodiment, the one or more processors are further configured to execute instructions causing the one or more processors to: (a) expand upon the extracted set of attributes for at least one of the master profiles for a first POI of the one or more POIs, (b) perform an updated targeted document discovery based on the expanded extracted set of attributes for the first POI, (c) generate a document profile for each of the discovered documents for the first POI during the updated targeted document discovery operation, (d) cluster, based on the generated document profiles for the first POI, the discovered documents for the first POI, and (e) add the clustered discovered documents for the first POI to the respective master profile for the first POI.

In an embodiment, the one or more processors are further configured to execute instructions causing the one or more processors to: repeat steps (a)-(e) until the set of termination criteria is met.

The particular organization of data and control flows described herein may allow large, heterogeneous, multilingual document collections to be handled with fewer analysis operations, less duplicated work and processing effort. In some embodiments, by first processing possible matches to the one or more POIs, repeated searching and analyzing the entire underlying document collections may be avoided or at least reduced. Clustering these matches into master profiles and extracting compact attribute sets may allow subsequent searches and updates to operate on smaller, structured records instead of potentially large unstructured document collections, thereby potentially reducing memory usage and the number of read and write operations. Generating document profiles for newly discovered documents and re-clustering the documents before incrementally merging them into the existing master profiles may enable reuse and enrichment of stored results. The use of termination criteria may help to limit processing time, storage consumption and network traffic when handling very large heterogeneous and multilingual document collections. The method thus can allow for constructing and maintaining disambiguated person profiles while reducing computational, storage and network resources.

It shall be understood that the computer-implemented method of claim 1, the non-transitory program storage device of claim 14 and the system of claim 15 have similar and/or identical preferred embodiments, particularly as defined in the dependent claims.

It shall be understood that a preferred embodiment of the present invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

The accompanying drawings, which are incorporated in and constitute a part of this specification, illustrate embodiments and together with the description, serve to explain the principles of the methods and systems:
FIG. 1 illustrates a block diagram of an example environment.
FIG. 2 illustrates an example method for compiling and delivering AI-powered individual person profiles, according to one or more disclosed embodiments.
FIG. 3 illustrates a block diagram of an example computing device.

### DETAILED DESCRIPTION OF ILLUSTRATIVE EMBODIMENTS

Current person-profiling solutions typically focus on limited subsets of documents related to the relevant entities, i.e., rather than the entire corpus of the billions of documents now readily available via the Internet or other sources. Moreover, current person-profiling solutions often rely heavily on increasingly complex rules-based profiling methods that may: (1) depend primarily on exact keyword matching, i.e., lacking contextual understanding; (2) struggle to accurately differentiate among entities sharing similar or identical names and related attributes; (3) fail to reliably identify and link the same entity across multiple documents with varying terminology or descriptors; (4) cannot intelligently infer or connect related pieces of information unless explicit references or links are provided; and/or (5) are not capable of automatically or iteratively refining their search parameters based on newly-discovered or evolving information.

Given that these billions of documents consist predominantly of unstructured-and potentially multilingual-text data, solving this challenge using traditional methods becomes impractical or impossible. Thus, to effectively extract meaningful insights from such data sets and create reliable and accurate personal profiles, solutions are needed that are adaptive, contextually "intelligent," and scalable beyond traditional complex rule-based profiling systems.

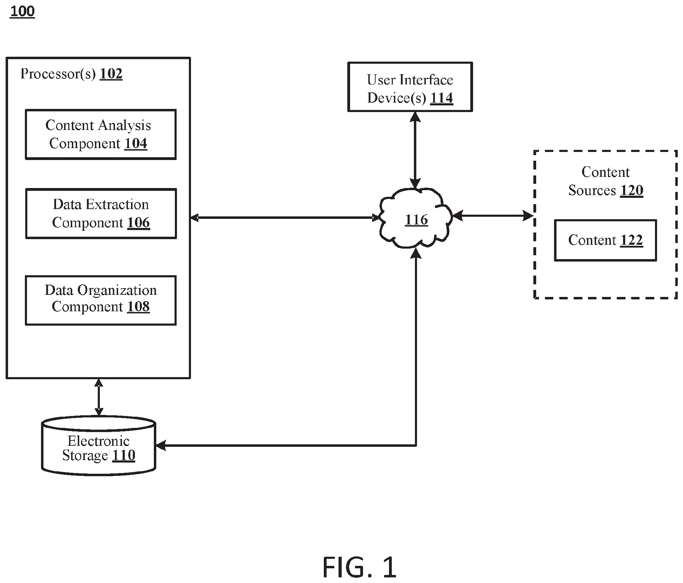

FIG. 1 illustrates an example hardware and network configuration, in which the systems and methods described herein may be implemented. Such a hardware and network system 100 includes a processor 102, a database 110, at least one user interface device 114, and at least one content source 120. The processor 102, database 110, at least one user interface device 114, and at least one content source 120 are in communication via a network 116. The processor 102 may be in communication with the database 110. The processor 102 may cause data to be stored in the database 110 and/or receive data stored in the database 110. The database 110 may store a variety of different data.

The processor 102, electronic storage 110, user interface device(s) 114, and content source(s) 120 may each comprise one or more computing devices and/or network devices. The network 116 may comprise one or more public networks (e.g., the Internet) and/or one or more private networks. A private network may include a wireless local area network (WLAN), a local area network (LAN), a wide area network (WAN), a cellular network, or an intranet. The network 116 may comprise wired network(s) and/or wireless network(s).

The processor 102 may be configured to receive, capture, and categorize data. The processor 102 may include a variety of different components. For example, the processor may include a content analysis component 104, a data extraction component 106, and/or a data organization component 108. One or more of these components 104, 106, 108 may be used to capture and categorize data from a large quantity of data sources, e.g., online resume repositories.

In embodiments, the processor 102 includes the content analysis component 104. The content analysis component 104 may be configured to receive content 122 from the content source(s) 120. The content 122 may include digital content or non-digital content that may be digitized. For example, the content 122 may include documents, files, articles, resumes, curriculum vitaes (CVs), webpages, etc. The content source(s) 120 may include any source of digital or non-digital content, including but not limited to website providers, digital content providers, books, brochures, pamphlets, resume repositories, conference/symposium website, open-source code repositories, message boards, etc. There may be tens, hundreds, thousands, or millions of content sources 120. To receive the content 122, the content analysis component 104 may retrieve the content 122. Alternatively, the content 122 may be sent to the content analysis component 104.

The content analysis component 104 may be configured to determine whether received content 122 includes information related to one or more persons. A "person," as used herein, refers to a uniquely identifiable individual, in whom the profiling entity may have an interest.

In certain embodiments, the content analysis component 104 may also determine a language associated with the content. For example, the content analysis component 104 may determine whether the content contains English, Spanish, French, Russian, Mandarin, etc. The content analysis component 104 may determine whether the presence of a particular language is associated with a higher likelihood of a piece of content being associated with a particular person (e.g., if the particular person uses only a known set of languages).

If the content analysis component 104 determines that a given piece of content is associated with a particular person, the piece of content can be added to (or otherwise associated with) the particular person's profile. In some embodiments, de-duplication and/or clustering algorithms may also be applied to analyzed content before determining whether to add the piece of content to the particular person's profile.

In embodiments, the processor 102 includes the data extraction component 106. If the content analysis component 104 determines that one or more pieces of received content 122 includes information relevant to multiple different contributing individuals, the content analysis component 104 may be configured to send (i.e., forward) the information to the data extraction component 106. The data extraction component 106 may be configured to receive and parse the information, such that only the appropriate matching information from the analyzed content is added to the correct individual's profile.

The data extraction component 106 may be configured to extract any or all potentially-relevant and/or contributor-identifying information from received content 122. For example, if the received content 122 reflects that a given individual has a particular expertise or skill set, or an association with particular organizations, such extracted information may be used by content analysis component 104 to enhance the individual's personal profile.

In embodiments, the processor 102 may also include a data organization component 108. The data organization component 108 may be configured to organize the extracted data according to personal name, username, and/or email address (i.e., by individual). For example, the data organization component 108 may create a hash of the personal name/username/email address in a particular row and associate all of the other data related to a particular person with that row. In this manner, the data organization component 108 may organize the extracted data so that it is arranged according to individuals. Arranging the extracted data according to individual may provide an entity with the ability to gain a quick and comprehensive overview of the personal details associated with a particular individual and, thus, more readily find connections and information about individuals that would likely be missed in prior art manual searches.

In embodiments, the data organization component 108 may be configured to send the organized data or persist the organized data to electronic storage, e.g., database(s) 110. The database(s) 110 may receive the organized data and maintain it in profiles according to personal name. For example, the database(s) 110 may receive some or all relevant information associated with particular individuals for whom profiles are being constructed. The individuals' profile(s) and/or associated information may then be viewed, such as by an entity, via one or more user interface device(s) 114. The user interface device(s) 114 may include at least one of a tablet, phone, smart phone, computer, laptop, television, etc.

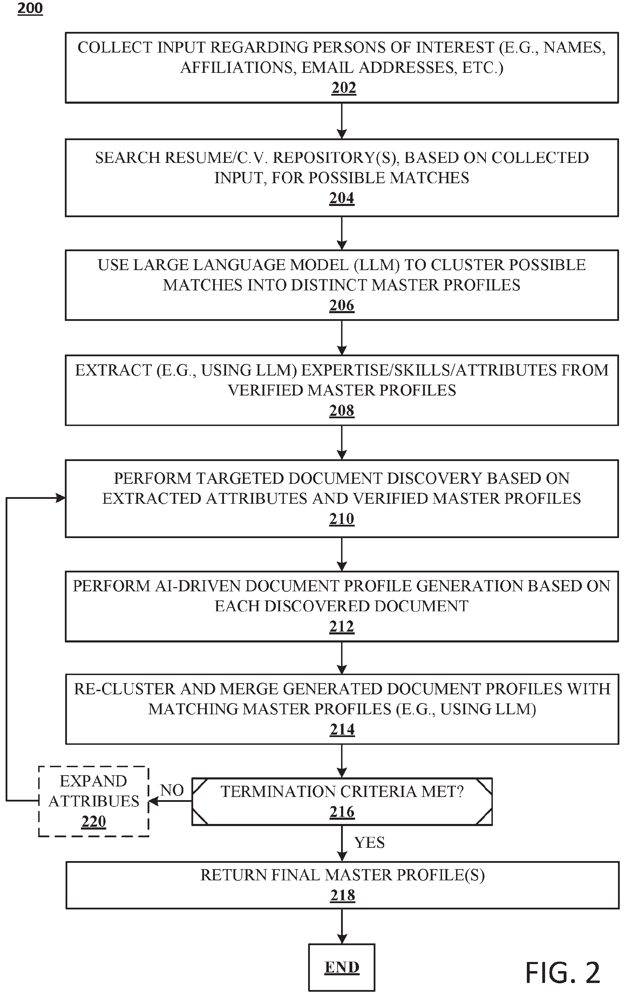

Figure 2 illustrates an exemplary method 200 for compiling and delivering AI-powered individual person profiles, according to one or more embodiments. The method 200 may be performed, for example, by the processor 102 of FIG. 1. The method 200 may be performed to reliably extract accurate, structured information about specific entities and effectively disambiguate entities at a massive scale, particularly when faced with varying contexts, inconsistent naming conventions, and multilingual complexities. In some implementations, the techniques described herein may be integrated directly into an organization's existing software offerings, thus enabling the organization to analyze many entities via intelligent profile creation- and even to iteratively refine such profiles. In still other implementations, the techniques described herein may be made available via an application programming interface (API), i.e., to enable organizations to construct and refine person profiles while leveraging external processing resources, LLMs, etc.

As described above, at 202, a processor (e.g., the content analysis component 104) may be configured to collect input regarding persons of interest (POIs), e.g., names, affiliations, aliases, email addresses, phone numbers, etc., known or suspected to be associated with the POIs.

At 204, the method 200 may search resume/C.V. repository(s), based on the collected input from 202, for possible matches based on the information collected about the POIs.

At 206, the method 200 may use a Large Language Model (LLM) to cluster possible resume/C.V. matches into distinct master profiles. In some embodiments, the method 200 may employ LLM-driven reasoning to analyze the retrieved resumes/C.V.s, thereafter clustering them based on similarity, to attempt to distinguish between profiles belonging to an intended POI and those of similarly-named individuals. Such embodiments may also use advanced AI techniques to distinguish between different individuals with similar attributes and to recognize the same person across different contexts, thereby solving several fundamental challenges in unstructured data analysis. In some embodiments, the LLM is a deep neural network, in particular for natural language processing, such as a transformer-based encoder-decoder model, a recurrent neural network, or a mixture-of-experts architecture. The LLM may be pre-trained in an unsupervised or self-supervised manner on large, generic text collections, and may optionally be further adapted to the present use case by additional training on domain-specific documents, e.g. by supervised fine-tuning on labelled examples, by continued pre-training on unlabelled in-domain text, by instruction-tuning, and/or by parameter-efficient adaptation techniques such as adapter layers, prompt-tuning or low-rank adaptation. The LLM can be provided and used "as-a-service" via a remote web API, via a remote procedure call or message-based interface to a separate inference server, or as a local software library or microservice executing on one or more processors and/or GPUs. The LLM may be provided with prompts constructed from the resume/C.V. matches and/or other discovered documents, including, for instance, available attributes and context sentences. The LLM may be adapted specifically for use in method 200. However, in some embodiments, this may not be required, as a person skilled in the art may implement the method using pre-trained LLMs with sufficient language coverage and, where desired, may apply one of the above adaptation techniques to tailor the LLM's behavior to the respective task of method 200.

According to some embodiments, the profile clustering process may comprise, for each new profile, systematically comparing the profile against other cluster data across one or more of the following dimensions: (1) Identity Matching: Consider name uniqueness, initials, translations, titles, phonetic similarity, etc.; (2) Contact Information Alignment: Evaluate email and phone number consistency; (3) Demographic and Geographic Consistency: Analyze gender and geographic locations for compatibility; (4) Organizational Affiliations: Check overlap or contradictions with affiliations documented in the cluster; (5) Expertise and Skill Patterns: Match areas of expertise, skill sets, and interests; (6) Timeline Consistency: Verify chronological alignment with events, career stages, and known affiliations; (7) Industry and Professional Context: Validate alignment of industry-specific knowledge and practices; (8) Publication and Professional Activity: Evaluate consistency in publication history, presentations, awards, or recognized professional activities; (9) Career and Educational Trajectory: Check compatibility in educational history, career progression, and positions held; (10) Language and Communication Skills: Evaluate match based on documented language abilities; and (11) Additional Indicators: Consider other unique identity indicators relevant to professional clustering.

At 208, the method 200 may extract (e.g., also using an LLM) relevant expertise, skills, and/or pertinent attributes from the verified master profiles. In some embodiments, a user may verify the master profiles created at 206 (i.e., to confirm they are indeed profiles containing information associated with a POI) before proceeding with the attribute extraction process of 208.

At 210, the method 200 may perform targeted document discovery based on extracted attributes and verified master profiles. In some embodiments, e.g., after potentially redundant or duplicative relevant documents are removed, the method 200 may perform an advanced search across a vast database, e.g., containing up to billions of documents, while optimizing multiple search parameters to ensure relevance. In some embodiments, deduplication of documents may be performed by computing a hash value or fingerprint for each document, such as a cryptographic hash of the full content or a locality-sensitive hash based on shingles of the text. Documents with identical or sufficiently similar fingerprints may be treated as duplicates, and only one representative may be forwarded to the subsequent analysis stages. A deduplication component may maintain an index that maps each computed fingerprint to one or more document identifiers. When a new document is discovered, its fingerprint may thus be computed and looked up in the index, and if a matching entry is found the new document may be marked as a duplicate and optionally merged at the metadata level with the existing representative. For near-duplicate detection, multiple fingerprints, for example, at different shingle sizes, may be computed per document and a similarity threshold may be applied to decide whether two documents are sufficiently similar to be considered duplicates. In embodiments where exact deduplication is required, a byte-by-byte comparison of document contents may optionally be performed for documents that share the same cryptographic hash value, in order to rule out hash collisions before discarding a document.

According to some embodiments, the document discovery process may comprise employing one or more of the following operations: (1) using syllable-based break downs of Pinyin Chinese names to search for different versions of the same name (e.g., "Liu Xiaofeng" becomes "Xiaofeng Liu" or "Liu Xiao Feng," etc.). For Latin-based names, a first or last name may be shortened to diminutive forms and/or initials and added to the search (e.g., "Jonathan Doe" can become "Jonathan D.," "John D," and/or "J. Doe," etc.); (2) all Chinese-based terms may be searched in both simplified and traditional Chinese characters; (3) an LLM may be used to generate multilingual organization name aliases for all user inputs and profile affiliations based on user specified languages (since these terms come from the LLM, the user can specify any language); (4) an LLM may be used to generate expertise extraction, e.g., based on the documents found, affiliations, and initial profile to increase search terms (e.g., if someone is a software engineer, the LLM may add to the terms "software" and/or "Python" in English and the user-specified language(s) to the discovery process); or (5) documents containing certain risk indicators may be prioritized, e.g., through an efficient, multi-phase selection strategy using automaton-based term matching. In some embodiments, the syllable-based break downs of Pinyin Chinese names may be implemented by applying a standard Pinyin segmentation algorithm or dictionary to split a character sequence into a sequence of valid Pinyin syllables, for instance using lexicon-based maximum matching or statistically trained segmentation models. The resulting syllable sequence can then be re-ordered and recombined, in particular with or without spaces, to generate alternative name strings to be used as additional search keys. For Latin-based names, diminutive forms and initial abbreviations may be generated using pre-defined mapping tables and by constructing variants that combine initials with surnames and, optionally, with or without punctuation. In some embodiments, an LLM may be used to assist in the syllable-based breakdown and variant generation by receiving a full name string as input and returning a list of suggested syllable segmentations and/or diminutive or initial-based variants. These suggestions may be post-processed and filtered by the system before being added to the set of search terms. The LLM may be one of the LLMs specified above. In particular, the LLM may be the same LLM as employed at one or more of the previous steps of method 200, such as step 206. In some embodiments, the predetermined risk indicators may be defined as a configurable set of terms and patterns, for example one or more of: single keywords, multi-word phrases, Boolean combinations of terms, or regular expressions describing character-level or token-level patterns. These indicators may be supplied by a user, by an external policy engine, or by importing a predefined rule set, and may optionally be associated with metadata such as a risk category and/or a severity score. The automaton-based term matching may, for example, be implemented by constructing a finite-state automaton or trie data structure from the full set of risk indicators and then scanning the text of each candidate document once, character by character or token by token, to detect all occurrences of any of the indicators. In some embodiments, an Aho-Corasick style automaton is built over the set of keywords and phrases, enabling efficient simultaneous matching of all indicators. In some embodiments, regular expressions representing the risk indicators may be compiled into a deterministic or non-deterministic finite automaton and evaluated using a streaming regular-expression engine, so that the document does not need to be fully loaded into memory. The multi-phase selection strategy may first apply a fast automaton-based lexical filter to identify candidate documents containing at least one indicator, and then perform a second, more fine-grained analysis phase only on this reduced set of candidate documents.

At 212, the method 200 may perform AI-driven document profile generation based on each discovered document. In some embodiments, the method 200 may utilize an LLM to systematically extract structured profiles from each unique document, thereby enabling the LLM to identify and organize key information that is relevant to the POI(s). "Structured profiles," as used herein, refers to comprehensive person records that are constructed iteratively, i.e., as documents are processed. These profiles may contain organized fields for names (e.g., native/English versions), contact information, employment history, education, skills, and demographic data, etc. The LLM may be one of the LLMs specified above. In particular, the LLM may be the same LLM as employed at one or more of the previous steps of method 200, such as steps 206 and/or 210.

At 214, the method 200 may re-cluster and merge the generated document profiles from 212 with the matching master profiles initially created at 206 (e.g., again leveraging an LLM to generate such document profiles). In some embodiments, using advanced reasoning capabilities, the method 200 clusters the document-derived profiles to accurately determine which profiles pertain to the same POI, subsequently merging the associated details into cohesive master profiles for each POI. At step 214, an LLM may be employed which can be one of the LLMs specified above. In particular, the LLM may be the same LLM as employed at one or more of the previous steps of method 200, such as one or more of steps 206, 210, and 212.

At 216, the method 200 checks to see if a desired termination criteria is met. According to some embodiments, the method 200 may continue in an iterative "search and enhancement" process until the desired termination criteria are met. According to some embodiments, the termination criteria may include or be determined based upon: cost limitations (e.g., terminate once $X have been spent on the profile generation process), maximum iteration thresholds (e.g., terminate once X iterations have been performed), or the point at which no significant new information emerges (e.g., terminate if at least X new documents or attributes are not added to a profile in a given iteration). In some embodiments, the cost limitation may be based on one or more technical resource budgets, such as a maximum number of calls to an LLM service, a maximum total processor time, a maximum GPU time, a maximum storage capacity and/or a maximum volume of data transferred over the network. The maximum iteration threshold may be configured statically or adjusted dynamically based on available memory or processing capacity of the profiling system. The criterion that no significant new information emerges may be evaluated by maintaining counters or statistics for each profile, e.g., terminating once the number of newly added documents and/or attributes per iteration falls below a predefined threshold, optionally over one or more consecutive iterations.

If the termination criteria are met (i.e., "YES" at 216), the method 200 may proceed to 218 and return the final master profile(s) of the POI(s) to the requesting entity/user. The final master profiles may comprise a set of compiled, integrated profiles containing all relevant and discovered information.

If, instead, the termination criteria are not met (i.e., "NO" at 216), the method 200 may proceed to 220 and expand upon the extracted attributes for the POIs. For example, newly-identified attributes, such as names, affiliations, and professional connections may be obtained and/or derived from the already-discovered documents to initiate additional iterative searches (i.e., returning in method 200 to 210), thereby enhancing the comprehensiveness of the POI profile creation process.

As may now be appreciated, unlike traditional "one-time" search systems, method 200 may implement an iterative feedback loop process that uses newly-discovered information to continuously refine and expand the search parameters of the document search. This creates a "snowball effect," wherein each piece of newly-discovered information may potentially lead to more relevant information. With each iteration, the system effectively "learns" more information about the POI, making the subsequent searches more precise and comprehensive. Thus, rather than just returning matching documents, the method 200 creates comprehensive POI profiles by extracting, clustering, and synthesizing information across multiple documents and contexts. The iterative feedback loop may reuse the master profiles and document profiles generated in previous iterations, such that documents that have already been analyzed do not need to be processed again. When restricting each new iteration to additional documents identified from an expanded set of attributes, the method can reduce redundant analysis operations and limit the volume of data that must be read from storage and transferred over the network. Together with the termination criteria described above, this organization of processing may allow the employed computer system to construct and maintain disambiguated POI profiles with bounded processing effort and reduced computational, storage and communication resources, even for very large, heterogeneous and multilingual document collections.

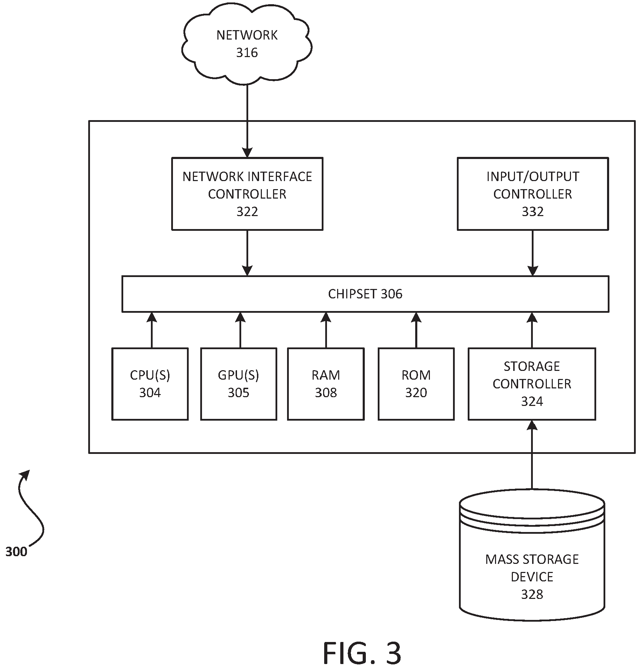

FIG. 3 depicts a computing device that may be used in various aspects. With regard to the example environment of FIG. 1, one or more of the processor 102, electronic storage 110, user interface device(s) 114, or content source(s) 120 may be implemented in an instance of a computing device 300 of FIG. 3. The computer architecture shown in FIG. 3 shows a conventional server computer, workstation, desktop computer, laptop, tablet, network appliance, PDA, e-reader, digital cellular phone, or other computing node, and may be utilized to execute any aspects of the computers described herein, such as to implement the methods described in FIG. 2.

The computing device 300 may include a baseboard, or "motherboard," which is a printed circuit board to which a multitude of components or devices may be connected by way of a system bus or other electrical communication paths. One or more central processing units (CPUs) 304 may operate in conjunction with a chipset 306. The CPU(s) 304 may be standard programmable processors that perform arithmetic and logical operations necessary for the operation of the computing device 300.

The CPU(s) 304 may perform the necessary operations by transitioning from one discrete physical state to the next through the manipulation of switching elements that differentiate between and change these states. Switching elements may generally include electronic circuits that maintain one of two binary states, such as flip-flops, and electronic circuits that provide an output state based on the logical combination of the states of one or more other switching elements, such as logic gates. These basic switching elements may be combined to create more complex logic circuits including registers, adders-subtractors, arithmetic logic units, floating-point units, and the like.

The CPU(s) 304 may be augmented with or replaced by other processing units, such as GPU(s) 305. The GPU(s) 305 may comprise processing units specialized for but not necessarily limited to highly parallel computations, such as graphics and other visualization-related processing.

A user interface may be provided between the CPU(s) 304 and the remainder of the components and devices on the baseboard. The interface may be used to access a random access memory (RAM) 308 used as the main memory in the computing device 300. The interface may be used to access a computer-readable storage medium, such as a read-only memory (ROM) 320 or non-volatile RAM (NVRAM) (not shown), for storing basic routines that may help to start up the computing device 300 and to transfer information between the various components and devices. ROM 320 or NVRAM may also store other software components necessary for the operation of the computing device 300 in accordance with the aspects described herein. The user interface may be provided by a one or more electrical components such as the chipset 306.

The computing device 300 may operate in a networked environment using logical connections to remote computing nodes and computer systems through local area network (LAN) 316. The chipset 306 may include functionality for providing network connectivity through a network interface controller (NIC) 322, such as a gigabit Ethernet adapter. A NIC 322 may be capable of connecting the computing device 300 to other computing nodes over a network 316. It should be appreciated that multiple NICs 322 may be present in the computing device 300, connecting the computing device to other types of networks and remote computer systems.

The computing device 300 may be connected to a storage device 328 that provides non-volatile storage for the computer. The storage device 328 may store system programs, application programs, other program modules, and data, which have been described in greater detail herein. The storage device 328 may be connected to the computing device 300 through a storage controller 324 connected to the chipset 306. The storage device 328 may consist of one or more physical storage units. A storage controller 324 may interface with the physical storage units through a serial attached SCSI (SAS) interface, a serial advanced technology attachment (SATA) interface, a fiber channel (FC) interface, or other type of interface for physically connecting and transferring data between computers and physical storage units.

The computing device 300 may store data on a storage device 328 by transforming the physical state of the physical storage units to reflect the information being stored. The specific transformation of a physical state may depend on various factors and on different implementations of this description. Examples of such factors may include, but are not limited to, the technology used to implement the physical storage units and whether the storage device 328 is characterized as primary or secondary storage and the like.

For example, the computing device 300 may store information to the storage device 328 by issuing instructions through a storage controller 324 to alter the magnetic characteristics of a particular location within a magnetic disk drive unit, the reflective or refractive characteristics of a particular location in an optical storage unit, or the electrical characteristics of a particular capacitor, transistor, or other discrete component in a solid-state storage unit. Other transformations of physical media are possible without departing from the scope and spirit of the present description, with the foregoing examples provided only to facilitate this description. The computing device 300 may read information from the storage device 328 by detecting the physical states or characteristics of one or more particular locations within the physical storage units.

In addition to or alternatively to the storage device 328 described herein, the computing device 300 may have access to other computer-readable storage media to store and retrieve information, such as program modules, data structures, or other data. It should be appreciated by those skilled in the art that computer-readable storage media may be any available media that provides for the storage of non-transitory data and that may be accessed by the computing device 300.

By way of example and not limitation, computer-readable storage media may include volatile and non-volatile, transitory computer-readable storage media and non-transitory computer-readable storage media, and removable and non-removable media implemented in any method or technology. Computer-readable storage media includes, but is not limited to, RAM, ROM, erasable programmable ROM ("EPROM"), electrically erasable programmable ROM ("EEPROM"), flash memory or other solid-state memory technology, compact disc ROM ("CD-ROM"), digital versatile disk ("DVD"), high definition DVD ("HD-DVD"), BLU-RAY, or other optical storage, magnetic cassettes, magnetic tape, magnetic disk storage, other magnetic storage devices, or any other medium that may be used to store the desired information in a non-transitory fashion.

A storage device, such as the storage device 328 depicted in FIG. 3, may store an operating system utilized to control the operation of the computing device 300. The operating system may comprise a version of the LINUX operating system. The operating system may comprise a version of the WINDOWS SERVER operating system from the MICROSOFT Corporation. According to additional aspects, the operating system may comprise a version of the UNIX operating system. Various mobile phone operating systems, such as IOS and ANDROID, may also be utilized. It should be appreciated that other operating systems may also be utilized. The storage device 328 may store other system or application programs and data utilized by the computing device 300.

The storage device 328 or other computer-readable storage media may also be encoded with computer-executable instructions, which, when loaded into the computing device 300, transforms the computing device from a general-purpose computing system into a special-purpose computer capable of implementing the aspects described herein. These computer-executable instructions transform the computing device 300 by specifying how the CPU(s) 304 transition between states, as described herein. The computing device 300 may have access to computer-readable storage media storing computer-executable instructions, which, when executed by the computing device 300, may perform methods described in relation to FIG. 2.

A computing device, such as the computing device 300 depicted in FIG. 3, may also include an input/output controller 332 for receiving and processing input from a number of input devices, such as a keyboard, a mouse, a touchpad, a touch screen, an electronic stylus, or other type of input device. Similarly, an input/output controller 332 may provide output to a display, such as a computer monitor, a flat-panel display, a digital projector, a printer, a plotter, or other type of output device. It will be appreciated that the computing device 300 may not include all of the components shown in FIG. 3, may include other components that are not explicitly shown in FIG. 3, or may utilize an architecture completely different than that shown in FIG. 3.

As described herein, a computing device may be a physical computing device, such as the computing device 300 of FIG. 3. A computing node may also include a virtual machine host process and one or more virtual machine instances. Computer-executable instructions may be executed by the physical hardware of a computing device indirectly through interpretation and/or execution of instructions stored and executed in the context of a virtual machine.

One skilled in the art will appreciate that the systems and methods disclosed herein may be implemented via a computing device that may comprise, but are not limited to, one or more processors, a system memory, and a system bus that couples various system components including the processor to the system memory. In the case of multiple processors, the system may utilize parallel computing.

For purposes of illustration, application programs and other executable program components such as the operating system are illustrated herein as discrete blocks, although it is recognized that such programs and components reside at various times in different storage components of the computing device and are executed by the data processor(s) of the computer. An implementation of service software may be stored on or transmitted across some form of computer- readable media. Any of the disclosed methods may be performed by computer-readable instructions embodied on computer -readable media. Computer-readable media may be any available media that may be accessed by a computer. By way of example and not meant to be limiting, computer-readable media may comprise "computer storage media" and "communications media." "Computer storage media" comprise volatile and non-volatile, removable and non-removable media implemented in any methods or technology for storage of information such as computer- readable instructions, data structures, program modules, or other data. Exemplary computer storage media comprises, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which may be used to store the desired information and which may be accessed by a computer. Application programs and the like and/or storage media may be implemented, at least in part, at a remote system.

### Additional Examples

According to Example 1, a computer-implemented method is disclosed comprising: collecting input from a user regarding one or more persons of interest (POIs); searching, based on the collected input, one or more repositories for possible matches to the one or more POIs; clustering the possible matches into distinct master profiles for each of the one or more POIs; extracting a set of attributes from the master profiles for each of the one or more POIs; performing a targeted document discovery based on the extracted set of attributes for each of the one or more POIs; generating a document profile for each of the discovered documents for each of the respective one or more POIs; clustering, based on the generated document profiles, the discovered documents for each of the respective one or more POIs; adding the clustered discovered documents to respective matching master profiles for the one or more POIs; and returning to the user, in response to a set of termination criteria being met, the master profiles for each of the one or more POIs.

According to Example 2, the method of Example 1 is disclosed, wherein the input comprises one or more of: a name; an alias; an affiliation; an email address; or a telephone number.

According to Example 3, the method of Example 1 is disclosed, wherein the one or more repositories comprise at least one of: a resume repository; a curriculum vitae (C.V.) repository; a social networking profile repository; or an organizational membership directory.

According to Example 4, the method of Example 1 is disclosed, wherein clustering the possible matches into distinct master profiles for each of the one or more POIs further comprises: performing clustering operations using a Large Language Model (LLM).

According to Example 5, the method of Example 1 is disclosed, further comprising: verifying by the user, prior to extracting the corresponding set of attributes for a POI, that at least one of the distinct master profiles relates to the POI.

According to Example 6, the method of Example 1 is disclosed, wherein extracting a set of attributes from the master profiles for each of the one or more POIs further comprises: extracting the set of attributes using an LLM.

According to Example 7, the method of Example 1 is disclosed, wherein the set of attributes comprises one or more of: expertise; skills; a name; an affiliation; an email address; a telephone number; and an organizational affiliation.

According to Example 8, the method of Example 1 is disclosed, wherein performing a targeted document discovery further comprises performing at least one of the following operations: (1) using a syllable-based break down of a name attribute of a POI; (2) using a shortened form or diminutive substitution of a name attribute of a POI; (3) searching a Chinese language-based term in both simplified and traditional Chinese characters; (4) using an LLM to generate multilingual organization name aliases based on a user-specified language; (5) using an LLM to generate expertise extractions from discovered documents; or (6) prioritizing discovery of documents containing one or more predetermined risk indicators.

According to Example 9, the method of Example 1 is disclosed, wherein performing a targeted document discovery further comprises: performing a deduplication operation on the discovered documents.

According to Example 10, the method of Example 1 is disclosed, wherein generating a document profile for each of the discovered documents for each of the respective one or more POIs further comprises: generating a document profile for each of the discovered documents for each of the respective one or more POIs using an LLM.

According to Example 11, the method of Example 1 is disclosed, wherein clustering, based on the generated document profiles, the discovered documents for each of the respective one or more POIs further comprises: clustering the discovered documents using an LLM.

According to Example 12, the method of Example 1 is disclosed, wherein the set of termination criteria comprises at least one of: a maximum cost criterium; a maximum iteration threshold criterium; and a new information discovery threshold criterium.

According to Example 13, the method of Example 1 is disclosed, further comprising, in response to the set of termination criteria not being met: (a) expanding upon the extracted set of attributes for at least one of the master profiles for a first POI of the one or more POIs; (b) performing an updated targeted document discovery based on the expanded extracted set of attributes for the first POI; (c) generating a document profile for each of the discovered documents for the first POI during the updated targeted document discovery operation; (d) clustering, based on the generated document profiles for the first POI, the discovered documents for the first POI; and (e) adding the clustered discovered documents for the first POI to the respective master profile for the first POI.

According to Example 14, the method of Example 13 is disclosed, further comprising: repeating steps (a)-(e) until the set of termination criteria is met.

According to Example 15, a non-transitory program storage device (NPSD) is disclosed, comprising computer readable instructions executable by one or more processors to perform the method of any of Examples 1-14.

According to Example 16, a system is disclosed comprising: an electronic storage component; a user interface device; and one or more processors operatively coupled to the electronic storage component, wherein the one or more processors are configured to execute instructions causing the one or more processors to perform the method of any of Examples 1-14.

As used in the specification and the appended claims, the singular forms "a," "an" and "the" include plural referents unless the context clearly dictates otherwise. Ranges may be expressed herein as from "about" one particular value, and/or to "about" another particular value. Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect.

It will be apparent to those skilled in the art that various modifications and variations may be made without departing from the scope or spirit. Other embodiments will be apparent to those skilled in the art from consideration of the specification and practice disclosed herein. It is intended that the specification and examples be considered as exemplary only, with a true scope and spirit being indicated by the following claims.

## Claims

1. A computer-implemented method, comprising:
collecting input from a user regarding one or more persons of interest (POIs);
searching, based on the collected input, one or more repositories for possible matches to the one or more POIs;
clustering the possible matches into distinct master profiles for each of the one or more POIs;
extracting a set of attributes from the master profiles for each of the one or more POIs;
performing a targeted document discovery based on the extracted set of attributes for each of the one or more POIs;
generating a document profile for each of the discovered documents for each of the respective one or more POIs;
clustering, based on the generated document profiles, the discovered documents for each of the respective one or more POIs;
adding the clustered discovered documents to respective matching master profiles for the one or more POIs; and
returning to the user, in response to a set of termination criteria being met, the master profiles for each of the one or more POIs.

2. The method of claim 1, wherein the input comprises one or more of: a name; an alias; an affiliation; an email address; or a telephone number.

3. The method of any of claims 1 or 2, wherein the one or more repositories comprise at least one of: a resume repository; a curriculum vitae (C.V.) repository; a social networking profile repository; or an organizational membership directory.

4. The method of any of the preceding claims, wherein clustering the possible matches into distinct master profiles for each of the one or more POIs further comprises: performing clustering operations using a Large Language Model (LLM).

5. The method of any of the preceding claims, further comprising: verifying by the user, prior to extracting the corresponding set of attributes for a POI, that at least one of the distinct master profiles relates to the POI.

6. The method of any of the preceding claims, wherein extracting a set of attributes from the master profiles for each of the one or more POIs further comprises: extracting the set of attributes using an LLM.

7. The method of any of the preceding claims, wherein the set of attributes comprises one or more of: expertise; skills; a name; an affiliation; an email address; a telephone number; and an organizational affiliation.

8. The method of any of the preceding claims, wherein performing a targeted document discovery further comprises performing at least one of the following operations:
(1) using a syllable-based break down of a name attribute of a POI;
(2) using a shortened form or diminutive substitution of a name attribute of a POI;
(3) searching a Chinese language-based term in both simplified and traditional Chinese characters;
(4) using an LLM to generate multilingual organization name aliases based on a user-specified language;
(5) using an LLM to generate expertise extractions from discovered documents; or
(6) prioritizing discovery of documents containing one or more predetermined risk indicators.

9. The method of any of the preceding claims, wherein performing a targeted document discovery further comprises: performing a deduplication operation on the discovered documents.

10. The method of any of the preceding claims, wherein generating a document profile for each of the discovered documents for each of the respective one or more POIs further comprises: generating a document profile for each of the discovered documents for each of the respective one or more POIs using an LLM.

11. The method of any of the preceding claims, wherein clustering, based on the generated document profiles, the discovered documents for each of the respective one or more POIs further comprises: clustering the discovered documents using an LLM.

12. The method of any of the preceding claims, wherein the set of termination criteria comprises at least one of: a maximum cost criterium; a maximum iteration threshold criterium; and a new information discovery threshold criterium.

13. The method of any of the preceding claims, further comprising, in response to the set of termination criteria not being met:
(a) expanding upon the extracted set of attributes for at least one of the master profiles for a first POI of the one or more POIs;
(b) performing an updated targeted document discovery based on the expanded extracted set of attributes for the first POI;
(c) generating a document profile for each of the discovered documents for the first POI during the updated targeted document discovery operation;
(d) clustering, based on the generated document profiles for the first POI, the discovered documents for the first POI; and
(e) adding the clustered discovered documents for the first POI to the respective master profile for the first POI;
wherein the method preferably comprises: repeating steps (a)-(e) until the set of termination criteria is met.

14. A non-transitory program storage device (NPSD), comprising computer readable instructions executable by one or more processors to:
collect input from a user regarding one or more persons of interest (POIs);
search, based on the collected input, one or more repositories for possible matches to the one or more POIs;
cluster the possible matches into distinct master profiles for each of the one or more POIs;
extract a set of attributes from the master profiles for each of the one or more POIs;
perform a targeted document discovery based on the extracted set of attributes for each of the one or more POIs;
generate a document profile for each of the discovered documents for each of the respective one or more POIs;
cluster, based on the generated document profiles, the discovered documents for each of the respective one or more POIs;
add the clustered discovered documents to respective matching master profiles for the one or more POIs; and
return to the user, in response to a set of termination criteria being met, the master profiles for each of the one or more POIs.

15. A system, comprising:
an electronic storage component;
a user interface device; and
one or more processors operatively coupled to the electronic storage component, wherein the one or more processors are configured to execute instructions causing the one or more processors to:
collect input from a user, via the user interface device, regarding one or more persons of interest (POIs);
search, based on the collected input, one or more repositories for possible matches to the one or more POIs;
cluster the possible matches into distinct master profiles for each of the one or more POIs;
extract a set of attributes from the master profiles for each of the one or more POIs;
perform a targeted document discovery based on the extracted set of attributes for each of the one or more POIs;
generate a document profile for each of the discovered documents for each of the respective one or more POIs;
cluster, based on the generated document profiles, the discovered documents for each of the respective one or more POIs;
add the clustered discovered documents to respective matching master profiles for the one or more POIs; and
return to the user, in response to a set of termination criteria being met, the master profiles for each of the one or more POIs.
